# DEMANDE DE BREVET EUROPEEN

(11) **EP 3 620 055 A1**
(43) Date de publication de la demande: **11.03.2020**
(21) Numéro de dépôt: 18315026.7
(22) Date de dépôt: 04.09.2018
(51) Int. Cl.: A21D 13/48, A23P 30/10

(54) **PAILLES À BOIRE ET COUVERTS EN PÂTES ALIMENTAIRES COMESTIBLES, SUCRÉES, AROMATISÉES OU NATURES, COMPOSTABLES ET ÉCOLOGIQUES**

(71) Demandeur: Nounes, Chouaïb, 64320 Bizanos (FR); El Ayachi, Khalid, 64000 Pau (FR)
(72) Inventeur: Nounes, Chouaïb, 64320 Bizanos (FR); El Ayachi, Khalid, 64000 Pau (FR)

(57) **Abrégé**

La présente invention concerne une méthode de fabrication de paille à boire et de couverts réalisés à base d'ingrédients qui composent les pâtes alimentaires.

La paille ou les couverts ainsi réalisés sont entièrement comestibles et peuvent être déclinés en version sucré, aromatisé ou nature.

La paille ou les couverts issus de ce procédé de fabrication sont compostables et écologiques ce qui en fait la meilleure alternative à la paille ou au couvert plastique à usage unique menacés d'interdiction par la Commission Européenne pour lutter contre la pollution et les déchets plastiques.

## Description

### DOMAINE DE L'INVENTION

Cette invention concerne une méthode qui consiste à fabriquer des pailles et couverts comestibles réalisées à base d'ingrédients qui composent les pâtes alimentaires. Ces pailles ou couverts sont de différentes tailles et aromatisés ou natures. Ces pailles ou couverts sont préparés de façon saine, hygiénique et sont comestibles. Ensuite quelques heures après les avoir utilisés ils peuvent être mangées ou naturellement détruites, compostés sans polluer l'environnement.

Avec un peu moins de 9 kilos consommés par personne et par an, les pâtes font parties des plats préférés des français.

### CONTEXTE DE L'INVENTION

De manière générale les pailles, sont des tubes légers, essentiellement fait en plastique, et parfois en métal ou bambou, dont on se sert pour aspirer, et le plus souvent boire un liquide. Elle se présente généralement sous la forme d'un cylindre droit ou parfois articulé avec une charnière en accordéon. Il existe également des formes plus fantaisistes, avec des courbes et des boucles. L'utilisation de pailles pour boire les liquides, minimise le contact de la boisson avec les dents, et permet ainsi de réduire le risque de carie. Aucune paille à boire n'est comestible à ce jour ni réalisée à base de pâtes alimentaires nature ou aromatisée.

Les couverts à usage unique sont en général en plastique.

### RESUMÉ DE L'INVENTION

Plusieurs millions de pailles et couverts sont utilisés puis Jetés en France.

Déchets les plus ramassés sur les plages françaises, les pailles et couverts en plastique ne sont utilisés que quelques minutes seulement et peinent à se recycler.

L'Union européenne s'apprête à interdire la commercialisation de certains produits en plastique à usage unique. D'autres produits devraient faire l'objet de mesures spécifiques pour réduire leur consommation et limiter la pollution des mers associée aux déchets plastique.

La Commission européenne annonce plusieurs mesures dont la plus forte est l'interdiction pure et simple de certains produits en plastique dont les pailles et les agitateurs à boissons

Le monde entier devient de plus en plus sensible à la protection de l'environnement. L'environnement est constitué de l'ensemble de la biodiversité terrestre et marine, c'est-à-dire toutes les espèces animales et végétales ainsi que les écosystèmes dans lesquels elles évoluent. Ces ressources naturelles sont indispensables à la vie de l'espèce humaine et de la Terre et doivent être préservées.

Le présente invention appelée Pasta'Paill (pour les pailles) est élaborée à partir d'ingrédients indispensables à la fabrication des pâtes alimentaires.

Cette invention, est une alternative aux pailles et couverts en plastiques néfastes pour l'environnement. En effet, contrairement aux pailles et couverts en plastique, ces pailles alimentaires et couverts sont le meilleur choix pour l'homme (car comestibles) et aussi pour l'environnement car ils sont biodégradables.

### MODE DE REALISATION DE L'INVENTION

Voici les 4 étapes de fabrication des pailles ou des couverts :

### • La sélection du blé et la mouture

Tout d'abord, il s'agit de bien sélectionner le blé chez des producteurs. La sélection du blé est garante de la qualité du produit fini, c'est pourquoi cette étape est importante. Une fois récoltés, les grains de blés sont nettoyés et dégermés puis sont moulus. On obtient alors une semoule de blé.

### • Le pétrissage

Cette semoule est ensuite mélangée dans de l'eau dans cette proportion : 4/5 de semoule + 1/5 d'eau. La pâte est alors pétrie, pressée et devient homogène et compact.

Pour les pailles ou couverts aromatisés, du sucre et du sirop connexe aux goût recherché sera mélangé à la pâte :
- Fraise
- Citron
- Menthe
- Vanille
- Pomme
- Poire
- Banane

### • Le tréfilage

Il s'agit de donner la forme définitive aux pâtes en passant la pâte pétrie dans un moule spécifique pour lui donner la forme et la longueur de la paille ou couvert souhaité.

Le diamètre d'une pallie doit être suffisamment petit pour que les poumons de l'utilisateur puissent emmagasiner l'air qui s'y trouve pendant les quelques secondes durant lesquelles il boit le liquide.

### • Le séchage

Le séchage est la dernière étape du processus de fabrication. Les pailles ou couverts sont séchés dans un grand tunnel d'air chaud. Il faut veiller à adapter la température et la durée de séchage en fonction de la forme de la paille ou du couvert. Tout comme la sélection du blé, cette étape est très importante et détermine la qualité des produits.

### BREVE DESCRIPTION DES DESSINS

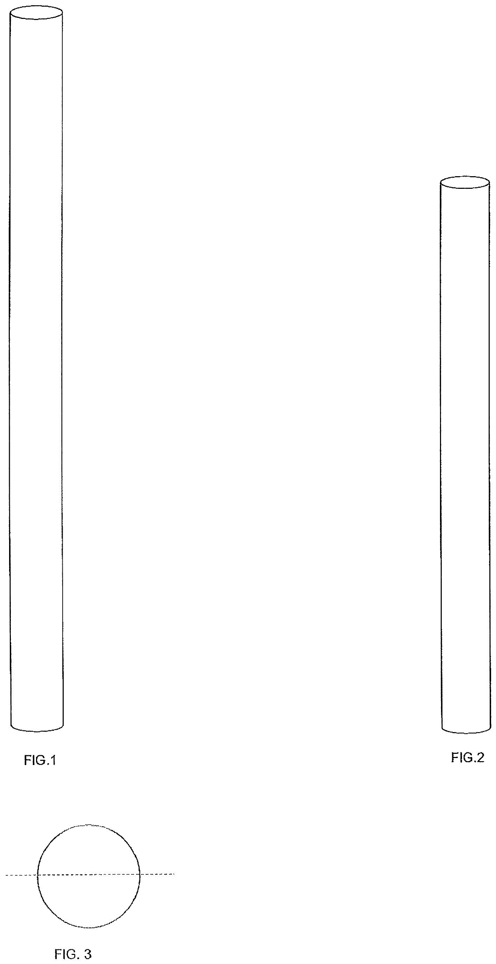

La présente invention est illustrée plus en détail sur les Figure 1 et Figure 2 qui représente les deux formats de l'invention, soit une paille de 18 à 22 cm (Fig.1) et une paille de 10 à 13 cm (Fig.2).

La figure 3 (Fig. 3) est une vue en coupe du produit, permettant de se rendre compte du diamètre de la paille, soit 6 cm.

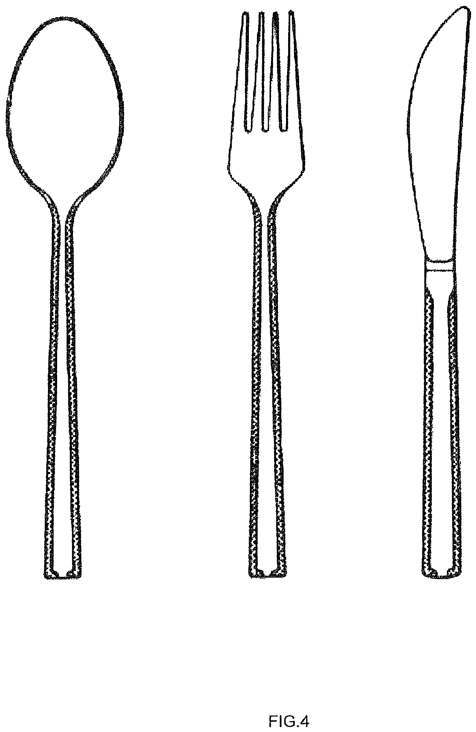

La figure 4 (Fig.4) représente les couverts :
Dimension de la fourchette : entre 160mm et 165mm
Dimension du couteau : entre 165mm et 170 mm
Dimension de la cuillère à dessert : entre 150mm et 155mm

## Revendications

1. Procédé de fabrication d'une paille comestible à base d'ingrédients composant les pâtes alimentaires, soit à base de semoule de blé **caractérisé par** la préparation et le pétrissage d'une pate issue d'un mélange d'eau et de semoule dans les proportions suivantes : 4/5 de semoule + 1/5 d'eau, son tréfilage dans des moules spécifiques pour la forme et la taille de la paille puis le séchage des pailles dans un grand tunnel d'air chaud.

2. Procédé de fabrication de couverts (fourchette, couteau, cuillère à dessert) comestibles à base d'ingrédients composant les pâtes alimentaires, soit à base de semoule de blé **caractérisé par** la préparation et le pétrissage d'une pate issue d'un mélange d'eau et de semoule dans les proportions suivantes : 4/5 de semoule + 1/5 d'eau, son tréfilage dans des moules spécifiques pour la forme et la taille puis le séchage dans un grand tunnel d'air chaud.

3. Procédé pour obtenir la paille comestible selon la revendication 1 **caractérisé en ce qu'**il comprend en outre une étape d'ajout d'arômes, saveurs et/ou colorants.

4. Procédé pour obtenir les couverts comestibles selon la revendication 2 **caractérisé en ce qu'**il comprend en outre une étape d'ajout d'arômes, saveurs et/ou colorants.

5. Paille selon la revendication 1 ou 2 caractérisé en une taille de 18 à 22 cm

6. Paille selon la revendication 1 ou 2 caractérisé en une taille de 10 à 13 cm
